# EUROPEAN PATENT APPLICATION

(11) **EP 4 797 651 A1**
(43) Date of publication of application: **26.08.2026**
(21) Application number: 25159495.8
(22) Date of filing: 21.02.2025
(51) Int. Cl.: H04L 47/22

(54) **SYSTEM FOR DIFFERENTIAL PROTECTION COMMUNICATION**

(71) Applicant: Hitachi Energy Ltd, 8050 Zürich (CH)
(72) Inventor: Gore, Rahul, 128 34 Stockholm (SE); Wang, Jianping, 724 60 Västerås (SE); Tajdinian, Mohsen, 723 46 Västerås (SE); Hoq, Md Tanbhir, 722 46 Västerås (SE)
(74) Representative: AWA Sweden AB

(57) **Abstract**

The present disclosure relates to a system (100) for controlling communication between a first protection system (PS_{A}) at a first substation (10_{A}) of an electrical power network (EPN) and a second protection system (PS_{B}) at a second substation (10_{B}) of the electrical power network (EPN), wherein the first substation (10_{A}) and the second substation (10s) are each electrically connected to a power line (PL), wherein a first protection relay (R_{A}) of the first protection system (PS_{A}) and a second protection relay (R_{B}) of the second protection system (PS_{B}) provide differential protection, the system (100) comprising: a communication network (1000), the system (100) is configured to: communicate critical data and non-critical data between the first protection system and the second protection system via said plurality of communication paths, wherein said critical data comprises first source data (SD_{A}) representing a first power line measurement of the power line (PL) at the first substation (10_{A}), and/or second source data (SD_{B}) representing a second power line measurement of the power line (PL) at the second substation (10_{B}), wherein the system (100) further comprises: at least one traffic shaper configured to control at least one network parameter associated with at least one node of said communication network to provide from said plurality of communication paths at least one traffic-shaped communication path in which communication of critical data is prioritized over non-critical data. An electrical power network (EPN) comprising the system and a method of controlling differential protection communication are also disclosed.

## Description

### Technical Field

The present disclosure relates to a system for differential protection communication, an electrical power network comprising the same, and a method of controlling differential protection communication.

### Background

In power grids, substations serve as critical nodes, connecting generation, transmission, and distribution systems while enabling control over voltage levels, power flow, and system protection. To ensure efficient and reliable operation, power lines connecting two or more substations can be monitored to promptly detect anomalies.

One solution for monitoring of power lines and fault detection is differential protection. In this approach, the current flowing through a power line is measured at two respective substations. A pair of cooperating differential protection relays, which may be located at respective substations, each receives one of these current measurements locally and the other via a communication channel. The respective protection relays calculate the difference between the current measurements from the two substations to detect any abnormal condition. An abnormal condition may indicate a fault, such as a short circuit or ground fault. Upon detecting an abnormal condition, the affected substations can be operated to isolate the fault and mitigate its impact.

Differential protection is primarily used in high-voltage (HV) transmission systems, where HV power lines are typically monitored based on monitoring data transferred between substations using an optical link. However, there has recently been a growing interest in cost-effective differential protection for medium-voltage (MV) lines. This demand arises from protection challenges associated with the integration of renewable energy sources at these voltage levels, as well as advancements in non-dedicated communication systems (e.g., public Ethernet or mobile networks) that are increasingly capable of meeting the performance requirements for reliable protection solutions.

While non-dedicated communication networks can be more cost-efficient than optical links, they face challenges such as variable packet delays, time synchronization errors (e.g., clock offsets), and packet losses. These issues can lead to incorrect or delayed data processing. Additionally, non-dedicated communication networks are more susceptible to cybersecurity threats compared to optical links. A cybersecurity threat typically involves interrupting electrical power flow, even if the power grid is operating nominally.

Non-dedicated communication introduces variability in how data is transmitted, leading to differing delays between forward and reverse paths. These asymmetries are a natural consequence of dynamic and shared networking environments. If the forward and reverse path delays are unequal, the time offset calculated by a synchronization protocol, such as Network Time Protocol, will be inaccurate, leading to clock drift or incorrect time alignment. Moreover, asymmetric delays can cause packets from one direction (e.g., acknowledgments) to arrive later than anticipated, leading to out-of-order delivery and increased jitter. For these reasons, protection relays may fail to receive accurate data for proper fault detection, resulting in reduced accuracy of fault detection.

In view of the above, there is a clear need for an improved solution when implementing differential protection with more cost-efficient communication networks.

### Summary

It is an object of the present disclosure to provide an improved solution that alleviates at least some drawbacks with present solutions or improves over present solutions in at least one aspect or provides an alternative over present solutions in at least one aspect. This and/or at least one other object, which will be implicitly or explicitly detailed in the following disclosure, is solved by one or more of the inventions defined in the claims. Additional advantageous embodiments are described in the following.

The present disclosure is based on the inventors' realization that a traffic shaper may be used to provide at least one traffic shaped communication path between a pair of protection relays in a communication network. If shaped properly, the traffic shaped communication path may provide a congestion free network path for critical data that is to be communicated between the pair of protection relays. This may facilitate communication between the pair of protection relays so that communication performance is improved with regards to packet delay, time offset error, and/or packet loss. By using a traffic shaper, it may significantly reduce transmission delay, jitters, asymmetry and clock offset typically introduced by non-dedicated communication networks. In addition, a time synchronization accuracy may also improve. Thus, a traffic shaper may improve the accuracy of transmission delay, and time offset estimations compared to standard ping-pong-based algorithms. Further, this approach does not need additional devices such as GPS or GNSS. This approach does not either need changes during operational process. Overall, accuracy of fault detection by protection relays may improve, thereby resulting in a more reliable differential protection operation by the pair of differential protection relays.

According to a first aspect of the present disclosure, a system for controlling communication between a first protection system at a first substation of an electrical power network and a second protection system at a second substation of the electrical power network is provided. The first substation and the second substation are each electrically connected to a power line, wherein a first protection relay of the first protection system and a second protection relay of the second protection system provide differential protection. The system comprises a communication network comprising a plurality of network devices and a plurality of communication paths interconnecting the plurality of network devices. Each network device forms a node of the communication network and each communication path is provided by a sequence of nodes including a first node configured to communicatively connect to the first protection system and a second node configured to communicatively connect to the second protection system. The system is configured to communicate critical data and non-critical data between the first protection system and the second protection system via the plurality of communication paths. The critical data comprises first source data representing a first power line measurement of the power line at the first substation and/or second source data representing a second power line measurement of the power line at the second substation. The system further comprises at least one traffic shaper configured to control at least one network parameter associated with at least one node of the communication network for providing, from the plurality of communication paths, at least one traffic-shaped communication path in which communication of critical data is prioritized over non-critical data.

The at least one traffic shaper may be implemented to regulate a flow of data packets in the communication network to manage bandwidth usage, preferably to reduce congestion, and optionally ensure compliance with quality of service (QoS) requirements. The at least one traffic shaper may advantageously allow a security window for a trip decision by the protection relays to be set more accurately, thus reducing erroneous trip decisions. The at least one traffic shaper may be configured to operate by delaying or prioritizing packet transmissions based on a predefined or dynamically adjustable traffic shaper policy, thereby smoothing traffic bursts and maintaining optimal network performance. The at least one traffic shaper may be a software-based traffic shaper.

As described above, the communication network comprises a plurality of network devices and a plurality of communication paths interconnecting the plurality of network devices. A network device of the plurality of network devices is preferably a switch or a router, but may alternatively be any one of a non-limiting list comprising a computer, a server, and an edge computing node. Each network device is configured to form a node of the communication network. Each communication path is provided by a sequence of nodes including a first node configured to communicatively connect to the first protection system and a second node configured to communicatively connect to the second protection system. The first node is provided by a first network device of the plurality of network devices. The second node is provided by a first network device of the plurality of network devices.

The plurality of network devices may comprise X network devices, wherein X is 2, 3, 4, 5, 6, 7, 8, 9, 10 or more. X may be 100 or more. X may be 1000 or more. The present disclosure is not as such limited to any particular value of X but may be scaled accordingly depending on implementation and distance between the pair of protection relays cooperating to provide differential protection.

Each network device is configured to be communicatively connected to at least one other network device. Any one network device may be configured to be communicatively connected to a plurality of other network devices.

The system may be configured to communicatively connect to a plurality of pairs of protection systems, each with its respective at least one protection relay, and each protection system arranged at a different substation. The system may thus advantageously control differential protection communication between any one pair of a plurality of pairs of differential protection relays.

The system may be configured to communicatively connect to a supervisory control and data acquisition, SCADA, system configured to monitor the first substation and the second substation (or any further substations). Thus, an operator of the SCADA system may monitor the system and any one of its functions.

It should further be understood that the first substation and the second substation may be located at different geographical areas (e.g., different countries). (e.g., different countries). The system may advantageously control differential protection communication between any two different geographical areas.

The system may be a stationary arrangement. The system may comprise at least one processor and a memory communicatively connected to the at least one processor. The memory may be configured to store instructions executable by the at least one processor to perform a function of the system, such as any one of the functions described in the present disclosure. The memory may be configured to store at least one traffic shaper configuration.

The system may be configured to communicatively connect with more than two protection systems, each protection system arranged at a respective substation, and the at least one processor, the memory, and the communication unit may be adapted accordingly. The system may be configured to communicatively connect with a display unit to display any operational data received and any data determined based on the operational data to a user. The system may comprise a user interface unit configured to enable a user to control the system and to control/adjust traffic shaper configurations provided by the system.

According to one embodiment, a first traffic shaper of the at least one traffic shaper is implemented on a first network device providing the first node; and/or a second traffic shaper of the at least one traffic shaper is implemented on a second network device providing the second node.

As described above, the first node is configured to communicatively connect to the first protection system. Thus, the traffic shaper implemented on the first network device may control the at least one network parameter associated with the first node to provide the traffic-shaped communication path in which communication of critical data is prioritized over non-critical data. The first network device may distribute information how the traffic shaper has controlled the at least one network parameter of the first node to at least a second network device in the communication network. The at least second network device may thus reconfigure itself to control the corresponding network parameter in a similar fashion to promote the traffic shaped communication path through the communication network. It should be understood that the first network device is not necessarily required to distribute the information to all network devices in the communication network; rather, it may distribute the information to those network devices that will provide nodes forming part of the traffic shaped communication path. Alternatively, or in combination, the traffic shaped communication path may develop dynamically based on communication conditions of the communication network.

As described above, the second node is configured to communicatively connect to the second protection system. The second traffic shaper of the at least one traffic shaper may be implemented on the second network device. The second traffic shaper may be configured similarly as the first traffic shaper.

According to one embodiment, the at least one traffic shaper comprises a plurality of traffic shapers, wherein each traffic shaper of the plurality of traffic shapers is implemented on a respective network device of the plurality of network devices. In other words, a traffic shaper may be implemented on at least a subset of the plurality of traffic shapers. The traffic shapers may preferably be implemented on network devices providing nodes associated with a communication load at least occasionally exceeding a communication load capability of each network device. Thus, applying traffic shaping at these nodes may significantly improve congestion of network traffic, thereby promoting communication of critical data between the protection systems.

According to one embodiment, one traffic shaper of the plurality of traffic shapers is implemented on each network device of the plurality of network devices. In other words, all network devices of the communication network may comprise a traffic shaper.

According to one embodiment, the system comprises a control device communicatively connected to at least one network device of the plurality of network devices. The control device is configured to: transfer traffic shaper software to at least one network device of the network devices for remote, or automatic, installation of one of the at least one traffic shaper implemented on the at least one network device. The control device is configured to, alternatively or in combination, configure one of the at least one traffic shaper implemented on the at least one network device.

The traffic shaper software may comprise software for installing a traffic shaper.

The traffic shaper software may comprise software for configuring a traffic shaper.

The control device may be configured to transfer the traffic shaper software to at least one network device of the network devices. Each network device to which the traffic shaper software is transferred to may comprise a memory for storing the traffic shaper software. Each network device to which the traffic shaper software is transferred to may comprise a processing unit. The processing unit of each network device may be configured to execute instructions stored on the memory of each network device to enable installment of the traffic shaper and/or configuration of an already installed traffic shaper. Each network device may be configured to enable remote installation and/or configuration of a traffic shaper. Each network device may be configured to install and/or configure a traffic shaper autonomously based on instructions stored on the memory of each network device and communication network information monitored by each network device or communication network information provided by the control device.

According to one embodiment, the at least one network parameter associated with the at least one node comprises: rate limit, committed information rate, peak information rate, burst size, priority level, and/or latency.

Rate limit may be a restriction on an amount of any particular type of data (such as non-critical data) that can be transmitted over a communication path per unit time (e.g., kilobits per second or megabits per second or gigabits per second). The rate limit may apply to any one communication path connected with the at least one node.

Committed information rate may be a guaranteed minimum bandwidth that a network device may commit to any particular type of data (such as critical data) and/or to any particular communication path connected with the at least one node. The type of data may in particular be critical data.

Peak information rate may be a maximum bandwidth a network device may allow during communication bursts for any particular type of data (such as critical data) and/or for any particular communication path connected with the at least one node, exceeding the committed information rate temporarily.

Burst size may be the amount of data of any particular type of data (such as critical data) that can be sent at the peak information rate before data traffic to or from the at least one node is throttled or dropped.

Priority level may be a classification assigned to different types of data (such as critical data and non-critical data) and/or to different communication paths connected with the at least one node.

Latency may be a time delay between sending and receiving a data packet of any one particular data type (such as critical data or non-critical data).

A traffic shaper implemented on the network device providing the at least one node may control any one of these network parameters to prioritize communication of critical data over non-critical data.

According to one embodiment, the system is configured to obtain information of data traffic into and/or out of at least one node of the communication network. The system may for example be configured to monitor the data traffic arriving at, or going out of, a node of the communication network. Each network device may provide data traffic information pertaining to information of data traffic to and/or from the node provided by the network device. The system may collect the information of data traffic from at least one network device of the communication network, optionally from each network device of the communication network. The system may monitor the collected information of data traffic and provide the collected information of data traffic to at least one network device of the communication network. That is, at least a first network device may receive information of data traffic from a second network device.

According to one embodiment, the at least one traffic shaper is configured to control the at least one network parameter associated with at least one node of the communication network autonomously based on the information of data traffic. For instance, the information of data traffic may indicate a congestion of data traffic between any two network devices, and the at least one traffic shaper may in response control the at least one network parameter accordingly to provide a traffic-shaped communication path which avoids the congestion of data traffic between the two network devices.

According to one embodiment, the system is configured to determine the at least one traffic-shaped communication path by means of a traffic shaping algorithm applied on the information of data traffic. The traffic shaping algorithm may incorporate a low congestion path algorithm for determining a low congestion path through the communication network between the first protection system and the second protection system. Low congestion path may refer to a path along which a particular type of data (such as critical data) can be communicated without any substantial congestion, preferably in a congestion free manner. The at least one traffic shaped communication path may be provided via a number of nodes while satisfying at least one predetermined communication parameter condition, such as allowing critical data to utilize unrestricted bandwidth and non-critical data to utilize the remainder of the bandwidth. In addition, the traffic shaped communication path may also be determined based on any number of nodes providing the fastest communication between the protection systems while satisfying at least one predetermined communication parameter condition. The at least one predetermined communication parameter condition may comprise at least one of a maximally allowable transmission delay, jitter, asymmetry and clock offset for communication between the first protection system and the second protection system.

According to one embodiment, the at least one traffic shaper is configured to: based on the information of data traffic, provide a data traffic policy to at least one network device of the plurality of network devices, which data traffic policy specifies how to process communication of the critical data and the non-critical data.

The data traffic policy may comprise a set of at least one rule and/or a configuration that govern how the network device manages, prioritizes, and/or regulates network traffic to and from the node formed by the network device. The data traffic policy may specify a set of at least one rule and/or a configuration pertaining to how the at least one network parameter is to be controlled.

According to one embodiment, the information of data traffic comprises: network burstiness, available data rate, data packet type, data packet delay, time offset error, and/or data packet loss.

Network burstiness may refer to a variation in network traffic over time. In a "bursty" network, data is transmitted in short, high-volume bursts rather than in a smooth, continuous stream. This can affect the performance of the communication network.

Available data rate may refer to a maximum speed at which data can be transmitted over a communication channel of the communication network. Available data rate may be expressed in bits per second (bps). The available data rate may depend on factors such as bandwidth, network congestion, and technology (e.g., 4G, fiber optic).

Data packets may refer to units of data that are transmitted over the communication network. A "type" of data packet may refer to its purpose or the protocol it follows. Common types include TCP packets, UDP packets, and IP packets, each serving different roles in network communication. The first source data and/or the second source data are preferably communicated through the communication network as data packets. Any other operational data, be it critical data or non-critical data, may be communicated through the communication network as data packets.

Data packet delay may refer to the time it takes for a data packet to travel from its source to its destination. The data packet delay may be influenced by factors such as the distance between the network devices, congestion in the communication network, routing, and hardware performance of the plurality of network devices.

Time offset error may refer to when there's a mismatch or discrepancy in the clocks of two network devices in the communication network or the two protection relays, leading to timing errors in data transmission. Time offset errors can cause problems in synchronization and coordination of different network devices or the protection relays.

Data packet loss may refer to when data packets fail to reach their destination. A packet loss can occur due to congestion in the communication network, hardware failure, or errors in the transmission process. Data packet loss may lead to reduced network performance and may require retransmission of the lost data.

The traffic shaper implemented on the network device providing the at least one node may control the at least one network parameter based the information of data traffic to improve performance of the communication network in any one of the above aspects.

According to one embodiment, the at least one electrical parameter of the first source data comprises a sample value and/or a phasor value based at least on the first power line measurement, and/or the at least one electrical parameter of the second source data comprises a sample value and/or a phasor value based at least on the second power line measurement.

The sample value may be a scalar value indicating at least a scalar value of a measured quantity.

The phasor value may be a complex number at least indicative of a magnitude and a phase of a measured quantity.

It should be understood that the aforementioned source data may comprise a time series of a plurality of sample values and/or phasor values measured by a plurality of power line measurements. That is, a sample rate of power line measurements may be higher than a communication rate of the communication network. However, it should be understood that the present disclosure is not limited to any particular sample rate and/or communication rate.

According to one embodiment, the system is configured to associate the critical data with a first priority level and the non-critical data with at least a second priority level having a priority lower than the first priority level.

That is, at least one network device may prioritize communication of critical data over non-critical data based on priority levels.

According to one embodiment, the system is configured to: measure a communication performance of the communication network; and based on measured communication performance, dynamically set a security window for a trip decision by the first protection relay and the second protection relay.

A security window in the context of differential protection relays may refer to a time period or a tolerance margin during which at least one protection relay will not provide a trip signal to a communicatively connected circuit breaker, even if the at least one protection relay detects an anomaly based on operational data. This is done to prevent false tripping due to erroneous electrical data, imperfect/bad communication conditions, and/or transient conditions or temporary imbalances in the electrical power network that are not actual faults.

In other words, if the at least one protection relay detects an anomaly present for a brief period (within the security window), the at least one protection relay may determine that this is just a transient condition and will not provide a trip signal. However, if the anomaly persists outside this security window, indicating a more serious, sustained fault, the at least one protection relay may determine that this is not just a transient condition and will provide a trip signal.

Thus, the system may be configured to monitor communication performance of the communication network and dynamically set the security window. This may advantageously improve the accuracy of a differential protection operation provided by the first protection relay and the second protection relay.

According to one embodiment, the communication performance is at least indicative of a communication latency, wherein the system is configured to activate a back-up protection when the communication latency exceeds a predetermined tolerance limit. A back-up protection may be an auxiliary protection relay provided to assist either of the first protection relay or the second protection relay. A back-up protection may be a power supporting system such as an energy storage system configured to absorb at least some power being transmitted in a power line.

According to one embodiment, the critical data comprises: timing service parameter data.

Timing service may refer to methods of synchronizing clocks of the plurality of network devices and/or the first protection system and the second protection system, in particular the first protection relay and the second protection relay. Timing service parameter data may refer to data of at least one parameter associated with timing service. By transmitting timing service parameter data as critical data, it may ensure or at least promote that all network devices and the protection systems operate with a synchronized clock.

Examples of types of timing services comprise, but are not limited to Network Time Protocol (NTP) and Precision Time Protocol (PTP).

That is, the critical data may comprise source data comprising at least one electrical parameter in combination with timing service parameter data.

According to one embodiment, the non-critical data comprises: monitoring data, file transfer data, and/or configuration command data.

Monitoring data may refer to data collected to track the performance, status, and health of devices or networks. Monitoring data may comprise metrics like traffic volume, device uptime, and error logs, used for diagnostics and performance optimization.

File transfer data may refer to data involved in the process of sending files between systems or devices. The file transfer data may include the file contents, metadata (file name, size), and transfer status. Common protocols used for file transfer data include FTP and SFTP.

Configuration command data may refer to commands sent to network devices to configure settings such as IP addresses, routing tables, and security policies. These commands manage device behavior and network functionality.

According to a second aspect of the present disclosure, an electrical power network is provided. The electrical power network comprises: at least one substation, wherein a first substation of the at least one substation is configured to electrically connect to a second substation via a power line. The first substation comprises a first protection system, wherein the first protection system comprises a first protection relay configured to cooperate with a second protection relay of a second protection system at the second substation to provide differential protection. The electrical power network further comprises: a system according to the first aspect or any embodiment thereof configured to provide the communication network.

It should be understood that the first substation may be located in a first geographical area and the second substation may be located in a second geographical area different from the first geographical area. Thus, the system may be configured to control differential protection communication between protection relays at substations across different countries, etc..

The first substation and/or the second substation may electrically connect to a powerline via a respective busbar. The busbar may serve as an interface between components of a substation and the power line.

According to one embodiment, the electrical power network comprises the second substation and the second protection system.

The electrical power network may comprise any plurality of substations. The electrical power network may comprise at least one transmission system and/or at least one distribution system. The at least one transmission system may be configured to electrically connect a power generation system with at least one (transmission) substation or between any two (transmission) substations. The at least one distribution system may be configured to electrically connect at least one load with at least one (distribution) substation or between any two (distribution) substations. The electrical power network may comprise at least one transmission and/or distribution system configured to electrically connect a first (transmission) substation with a second (distribution) substation.

Any one of the at least one transmission system and/or the at least one distribution system may comprise elements such as power lines (overhead, underground, etc.), support structures (e.g.,. towers), insulators, circuit breakers, transformers, capacitor banks and reactors, switch gear, surge arresters, and voltage converters. The aforementioned elements may be configured to cooperate to transmit power from a first substation to a second substation of the at least one substation.

According to one embodiment, the power line is a medium voltage, MV, power line, a low voltage, LV, power line, or a high voltage, HV, power line.

HV typically refers to voltages that exceed those used for residential and/or commercial applications, with specific thresholds depending on the region. For example, the International Electrotechnical Commission (IEC) generally considers alternating current (AC) voltages of 1000 V or more, and direct current (DC) voltages of 1500 V or more, to be classified as high voltage. More specifically, HV may refer to electrical voltage levels equal to or greater than 35 kV and up to several hundred kilovolts.

MV typically refers to electrical voltage levels that are higher than LV, but lower than HV. MV typically includes voltages equal to or greater than 1 kV but less than 35 kV. These voltage levels are commonly used for power distribution within urban or industrial settings and for the transmission of power to transformers that supply end-user loads.

LV typically refers to electrical voltage levels that are used for residential, commercial, and light industrial applications. LV typically includes voltages less than 1 kV, with the most common being 230 V for residential use and 400 V for commercial and industrial applications. LV power lines may be used to distribute electrical power directly to end users, such as homes, businesses, and small industries.

It should be understood that any one power line connected between the first substation and the second substation may be any one of a HV, MV, or LV power line.

It should be further understood that the system may be configured to control differential protection communication between cooperating differential protection relays for any one power line between the first substation and the second substation, which may be one power line of a plurality of power lines (such as in three-phase systems).

According to one embodiment, the first protection system of the first substation comprises: a transformer configured to electrically connect to the power line to provide the power line measurement, and/or a circuit breaker configured to activate in response to a control signal to isolate a first portion of the power line from a second portion of the power line.

The transformer may be a current transformer or a voltage transformer. Thereby, the transformer may transform the current or voltage to a more manageable level for measurement by a measurement device. The transformer may comprise the measurement device as an integrated device. The transformer may be electrically connected to a power line via at least one busbar.

The circuit breaker may be electrically connected to the power line. Thus, by operating a first circuit breaker at a first substation and a second circuit breaker at a second substation, a power line may be isolated. The circuit breaker may be a single use device, such as a fuse, or a multi-use device (such as a switch). The circuit breaker may be configured to automatically restore itself into a conducting state once an anomaly or an abnormal condition is resolved.

According to one embodiment, a protection relay at a substation can utilize at least one signal to detect faults and ensure reliable operation. The at least one signal may include at least one electrical signal (such as current, voltage, frequency) and/or a power measurement signal. The at least one electrical signal may be received e.g., from a current transformer (CT) or voltage transformer (VT). The power measurement signal may be determined based at least on the at least one electrical signal. The at least one signal may include at least one communication signal (such as SCADA data, IEC 61850 GOOSE signal, and pilot protection signals). The at least one communication signal may enable coordination with control systems and remote substations. The at least one signal may include environmental and mechanical signals, such as temperature, humidity, gas levels, and vibration data, allow monitoring of equipment conditions. Additionally, the at least one signal may comprise at least one of a binary input signal. Additionally the at least one signal may comprise a trip signal, a breaker position indicator signal, and/or an external alarm signal.

According to a third aspect of the present disclosure, a method of controlling communication between a first protection system at a first substation of an electrical power network and a second protection system at a second substation of the electrical power network is provided. The first substation and the second substation are electrically connected via a power line. The first protection system and the second protection system are communicatively connected via a communication network. The communication network comprises a plurality of network devices and a plurality of communication paths interconnecting the plurality of network devices, wherein each network device forms a node of the communication network and wherein each communication path is provided by a sequence of nodes including a first node configured to communicatively connect to the first protection system and a second node configured to communicatively connect to the second protection system. The method comprises communicating critical data and non-critical data between the first protection system and the second protection system via the plurality of communication paths. The critical data comprises first operational data comprising first source data representing a first power line measurement of the power line at the first substation and/or second operational data comprising second source data representing a second power line measurement of the power line at the second substation. The method comprises controlling at least one network parameter associated with at least one node of the communication network by means of at least one traffic shaper for providing, from the plurality of communication paths, at least one traffic-shaped communication path in which communication of critical data is prioritized over non-critical data.

The method may comprise at least one additional step, each additional step corresponding to any function described in reference to the system according the first aspect or any embodiment thereof.

The method may present the same or similar advantages as described in reference to the system according to the first aspect or any embodiment thereof.

According to a fourth aspect, a computer program is provided. The computer program comprises instructions which, when the program is executed by a computer, cause the computer to carry out the method according to the third aspect or any embodiments thereof.

According to a fifth aspect, a computer-readable storage medium is provided. The computer-readable storage medium comprises instructions which, when executed by a computer, cause the computer to carry out the method according to the third aspect or any embodiments thereof.

Effects and features of the second and third and fourth and fifth aspects are largely analogous to those described above in connection with the first aspect. Embodiments mentioned in relation to the first aspect are largely compatible with the second and third and fourth and fifth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of the Drawings

The invention will in the following be described in more detail with reference to the enclosed drawings, wherein:
Fig. 1a schematically illustrates a system according to one embodiment of the present disclosure for controlling differential protection communication between a first protection relay at a first substation and a second protection relay at a second substation;
Fig. 1b schematically illustrates a traffic shaper implemented on a network device of the system according to one embodiment of the present disclosure;
Fig. 2 schematically illustrates time stamp exchange between a first protection relay at a first substation and a second protection relay at a second substation according to one embodiment of the present disclosure;
Fig. 3 shows three graphs, each representing a measured communication parameter over time in a communication network;
Figs. 4a-4b show two graphs, each illustrating a bound on transmission delay in a communication network with and without at least one implemented traffic shaper, respectively;
Figs. 5a-5b show two graphs, each illustrating a bound on PDV (jitter) in a communication network with and without at least one implemented traffic shaper, respectively;
Figs. 6a-6b show two graphs, each illustrating a bound on clock offset in a communication network with and without at least one implemented traffic shaper, respectively;
Figs. 7a-7b schematically illustrate respective parts of a method of controlling differential protection communication between a first protection relay at a first substation and a second protection relay at a second substation;
Fig. 8 schematically illustrates an electrical power network according to one embodiment;
Figs. 9a-9c schematically illustrate different embodiments of a voltage source converter;
Fig. 9d schematically illustrates an energy storage system, and
Fig. 9e schematically illustrates power line connections to a substation of an electrical power network according to one embodiment.

### Description of Embodiments

Hereinafter, the principle of the present disclosure will be described with reference to illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached drawings. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

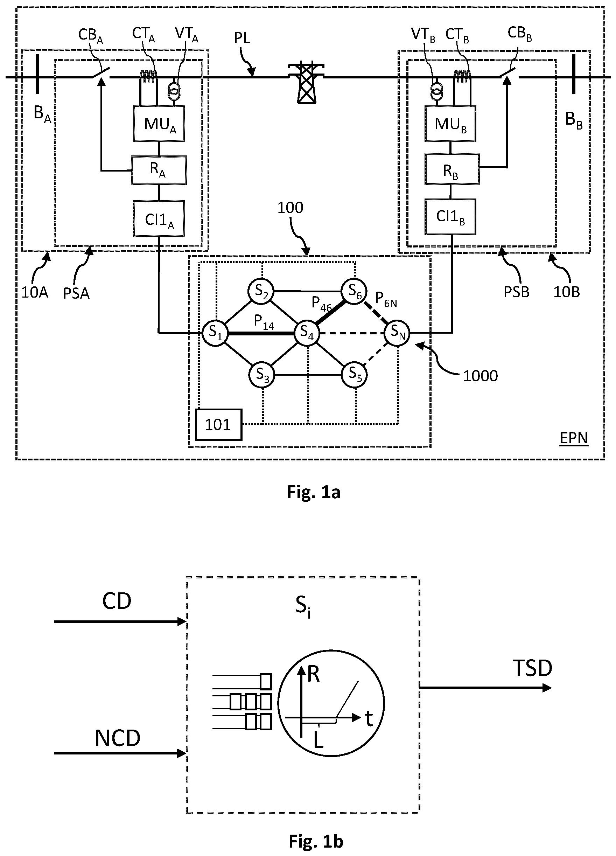

Fig. 1 schematically illustrates a preferred embodiment of a system 100 configured to control differential protection communication between a first protection relay R_{A} of a first protection system PS_{A} at a first substation 10_{A} of an electrical power network EPN and a second protection relay R_{B} of a second protection system PS_{B} at a second substation 10_{B} of the electrical power network EPN. The first substation 10_{A} and the second substation 10_{B} are each electrically connected to a power line PL, preferably via respective busbars B_{A}, B_{B}. The first protection relay R_{A} of the first protection system PS_{A} and the second protection relay R_{B} of the second protection system PS_{B} provide differential protection at least based on a first power line measurement of the power line PL at the first substation 10_{A} and a second power line measurement of the power line PL at the second substation 10_{B}. The system 100 comprises a communication network 1000 comprising a plurality of network devices S₁, S₂, ..., S_{N} and a plurality of communication paths interconnecting the plurality of network devices. Each network device forms a node of said communication network. Each communication path is provided by a sequence of nodes and communication paths between a first node configured to communicatively connect to said first protection system PS_{A} and a second node configured to communicatively connect to said second protection system PS_{B}. The system 100 is configured to communicate critical data and non-critical data between the first protection system PS_{A} and the second protection system PS_{B} via said plurality of communication paths. The critical data comprises first source data SD_{A} representing the first power line measurement of the power line PL at the first substation 10_{A}. The critical data may alternatively or in combination comprise second source data SD_{B} representing a second power line measurement of the power line PL at the second substation 10_{B}. The system 100 further comprises at least one traffic shaper. Each traffic shaper is configured to control at least one network parameter associated with at least one node of said communication network for providing, from the plurality of communication paths, at least one traffic-shaped communication path in which communication of critical data is prioritized over non-critical data.

Moreover, as exemplified in Fig. 1a, the first protection relay R_{A} may be communicatively connected to a first merging unit MU_{A}. The first merging unit MU_{A} may be configured to collect data from a first current transformer CT_{A} for providing or facilitating a current measurement in the power line PL and from a first voltage transformer VT_{A} for providing or facilitating a voltage measurement in the power line PL. The first protection relay R_{A} is also communicatively connected to a first communication interface CI1_{A} for providing and receiving operational data via the communication network 1000. The first protection relay R_{A} is also communicatively connected to a first circuit breaker CB_{A}.

Similarly, as exemplified in Fig. 1a, the second protection relay R_{B} may be communicatively connected to a second merging unit MU_{B}. The second merging unit MU_{B} may be configured to collect data from a second current transformer CT_{B} for providing or facilitating a current measurement in the power line PL and from a second voltage transformer VT_{B} for providing or facilitating a voltage measurement in the power line PL. The second protection relay R_{B} is also communicatively connected to a first communication interface CI1_{B} for providing and receiving operational data via the communication network 1000. The second protection relay R_{B} is also communicatively connected to a second circuit breaker CB_{B}.

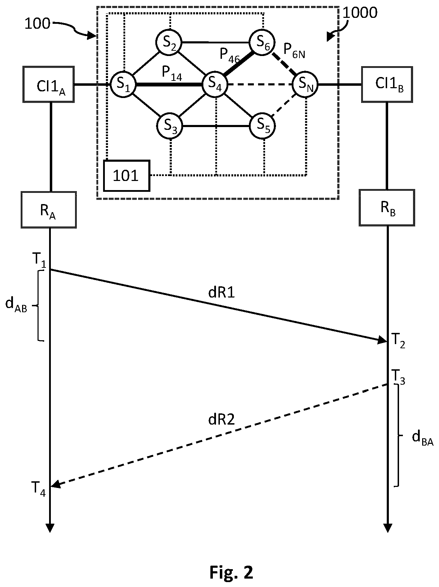

Fig. 2 schematically illustrates a traffic shaper implemented on a network device. The network device Sᵢ is any one of the plurality of network devices. The network device Si receives critical data CD and non-critical data NCD via one communication channel. The network device Si processes the incoming data and provides it as traffic-shaped data, TSD. The traffic shaper may work on principle of changing the shape of communication network in a specific way to provide free and congestion-free path for critical data CD. Delays or jitter encountered by critical data CD may depend significantly on burstiness of the communication network. The burstiness of communication network may depend upon background traffic parameters. A transmission delay or jitter of critical data CD can be controlled by changing the shape or parameters of arriving traffic.

In one preferred embodiment, the traffic shaper is configured to alter the behavior of a network device Sᵢ by changing the rate R and/or latency L within the network device for non-critical data NCD by limiting a data rate for non-critical data NCD. Optionally, this may be applied for both critical data CD and non-critical data NCD. If these parameters are controlled in a systematic manner, the non-critical data NCD can be controlled in a way that results into low and deterministic delay and jitter for critical data CD, thus effectively allowing communication of critical data CD to be prioritized over non-critical data NCD.

The at least one traffic shaper may comprise a first traffic shaper implemented on a first network device S₁ providing the first node; and/or a second traffic shaper of said at least one traffic shaper is implemented on a second network device S_{N} providing said second node. The at least one traffic shaper may preferably comprise a plurality of traffic shapers, wherein each traffic shaper of the plurality of traffic shapers is implemented on a respective network device S₁, S₂, ..., S_{N} of the plurality of network devices S₁, S₂, ..., S_{N}.

Fig. 1a further schematically illustrates a control device 101. The control device may be configured to be communicatively connected to at least one network device S₁, S₂, ..., S_{N} of said plurality of network devices S₁, S₂, ..., S_{N}. The control device 101 is configured to: transfer traffic shaper software to at least one network device of said network devices for remote, or automatic, installation of one of said at least one traffic shaper implemented on said at least one network device, and/or configure one of said at least one traffic shaper implemented on said at least one network device. The at least one network parameter associated with said at least one node comprises: rate limit, committed information rate, peak information rate, burst size, priority level, and/or latency. The traffic shaper implemented on a network device providing the at least one node may adjust the at least one network parameter to provide a traffic shaped communication path between the two protection systems PS_{A}, PS_{B}. The at least one traffic shaped communication path may comprise a plurality of communication paths P₁₄, P₄₆, P_{6N}, which traffic shaped communication path is routed via a plurality of network devices S₁, S₄, S₆, S_{N}.

The at least one traffic-shaped communication path may be determined by means of a traffic shaping algorithm applied on information of data traffic in the communication network. The information of data traffic may be provided by monitoring data traffic into and/or out of at least one node of the communication network. The information of data traffic may comprise any one of network burstiness, available data rate, data packet type, data packet delay, time offset error, and/or data packet loss. The at least one traffic shaper may be configured to, based on the information of data traffic, provide a data traffic policy to at least one network device of said plurality of network devices, which data traffic policy specifies how to process communication of said critical data and said non-critical data.

In order to estimate communication performance of the communication network when communicating differential protection communication between the two protection relays, the protection relays R_{A} and R_{B} may periodically exchange time stamps between each other via the communication network by using Delay Request signals dR1 and Delay Response signals dR2 as schematically illustrated in Fig. 2. It should be understood that any one of the protection relays may send a Delay Request signal dR1 and the other of the protection relays may, when it has received the Delay Request signal dR1, send a Delay Response signal dR2. Fig. 2a schematically illustrates the first protection relay R_{A} sending a Delay Request signal dR1 at a first timepoint T₁ to the second protection relay R_{B} and the Relay Request signal dR1 is received by the second protection relay R_{B} at a second timepoint T₂. The second protection relay R_{B} then sends a Delay Response signal dR2 at a third timepoint T₃ to the first protection relay R_{A} and the Delay Response signal dR2 is received by the first protection relay R_{A} at a fourth timepoint T₄. Operational data exchanged between the first protection relay and the second protection relay, either as analog or binary signals, may carry corresponding timestamps of the timepoints T₁, T₂, T₃, T₄. Alternatively, dedicated timing signals can be used by the protection relays to exchange the corresponding timestamps.

After exchanging operational data or dedicated timing signals, the timepoints T₁, T₂, T₃, T₄ may be made available locally at one of the protection relays, e.g., the first protection relay R_{A} as exemplified in Fig. 2. Communication performance can e.g., be quantified in terms of an average transmission delay and a time offset. The average transmission delay *d̂* and the time offset *θ̂_{A}* may be determined as follows: $\hat{d} = \frac{1}{2} \left({d}_{AB}+{d}_{BA}\right) = \frac{1}{2} \left(\frac{{T}_{4} - {T}_{1}}{{φ}_{A}}-\frac{{T}_{3} - {T}_{2}}{{φ}_{B}}\right)$ ${\hat{θ}}_{A} = \frac{1}{2} \left({T}_{1}-\frac{{φ}_{A}}{{φ}_{B}}{T}_{2}\right) + \frac{1}{2} \left({T}_{4}-\frac{{φ}_{A}}{{φ}_{B}}{T}_{3}\right) + {φ}_{A} \frac{Δ d}{2} + \frac{{φ}_{A}}{{φ}_{B}} {θ}_{B}$ where
*φ_{A}* is the clock frequency of the first protection relay R_{A},
*φ_{B}* is the clock frequency of the second protection relay R_{B},
*θ_{B}* is the initial clock offset at remote protection relay R_{B},
Δ*d* (*= d_{AB} - d_{BA}*) is the asymmetry in the bidirectional delays, i.e. *d_{AB} = d̂ +* Δ*d*/2 and *d_{BA} = d̂* - Δ*d*/2*.*

Generally, standard assumptions in most implementations are i) the clock of protection relay R_{B} provides the reference clock as true time (hence *φ_{B}* = 1 and *θ_{B} =* 0), and ii) the frequency error of local protection relay R_{A} is neglected (*φ_{A} =* 1). With these simplifications, the above equations can generally be simplify to $\hat{d} = \frac{{T}_{4} - {T}_{1}}{2} - \frac{{T}_{3} - {T}_{2}}{2}$ ${\hat{θ}}_{A} = \frac{1}{2} \left({T}_{1}-{T}_{2}\right) + \frac{1}{2} \left({T}_{4}-{T}_{3}\right) + \frac{Δ d}{2}$

Standard time synchronization implementations in NTP/SNTP and PTP may further simplify by assuming that delays are symmetric, i.e., Δ*d* = 0.

However, this is not true with imperfect communication in non-dedicated communication networks. The imperfect communication most often introduces asymmetries due to different forward and reverse network path delays. The imperfect communication also introduces variable data packet delays and time offset (synchronization) errors and distinct asymmetries. The communication network may be a non-dedicated communication network, such as a cloud communication network or an Ethernet-based communication network.

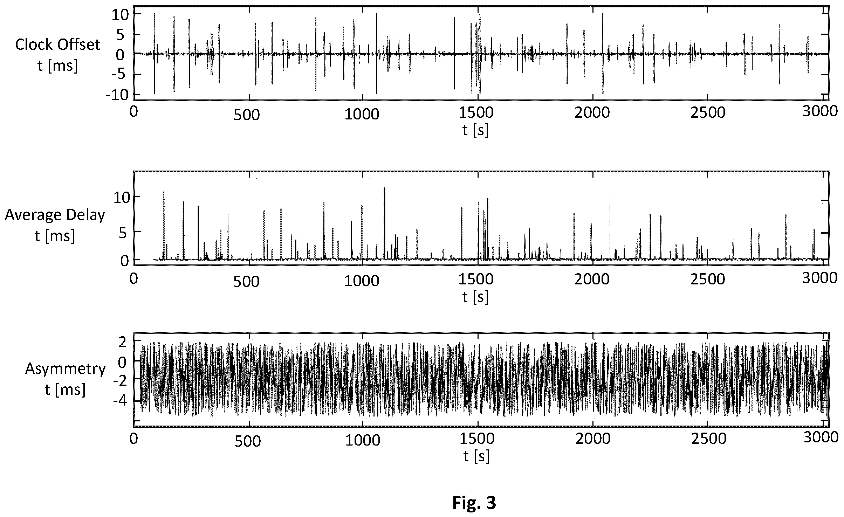

Fig. 3 shows three graphs, each representing a measured communication parameter over time in a communication network handling imperfect communication. In particular, the first graph shows a clock offset (in ms) over time (in s), the second graph shows an average delay (in ms) over time (in s), and a third graph shows an asymmetry (in ms) over time (in s) for communication between two protection relays communicatively connected via a non-dedicated communication network.

The first graph depicts how the clock of a first protection relay may deviate from a clock of second protection relay over time. As depicted, there are multiple instances wherein the clock offset reaches +10 ms or -10 ms before the clocks are synchronized. Typically, gradual increases or decreases in offset arise due to clock frequency mismatches (i.e., one clock is running faster or slower). However, sudden spikes in clock offset, as depicted in Fig. 3, may arise due to network congestion, processing delays, or re-synchronization events.

The second graph depicts how a round-trip time (RTT) or a one-way delay (OWD) between the two protection relays may vary over time, averaged over a certain period. This average delay may be affected by network congestion, variable routing (i.e., that data packets may take different paths through the communication network), or processing delays (one or more of the plurality of network devices or the protection relays may process information differently in terms of speed).

The third graph depicts the difference in forward and reverse path delays between the first protection relay and the second protection relay. In an ideal symmetric network, the delay in both directions should be nearly equal, resulting in an asymmetry close to zero. However, this is rarely the case in non-dedicated communication networks which may handle imperfect communication. Asymmetries can arise due to different routing paths or network congestion in a particular direction.

These aspects of imperfect communication in non-dedicated communication networks can be improved by a system according to one embodiment of the present disclosure, which system comprises at least one traffic shaper.

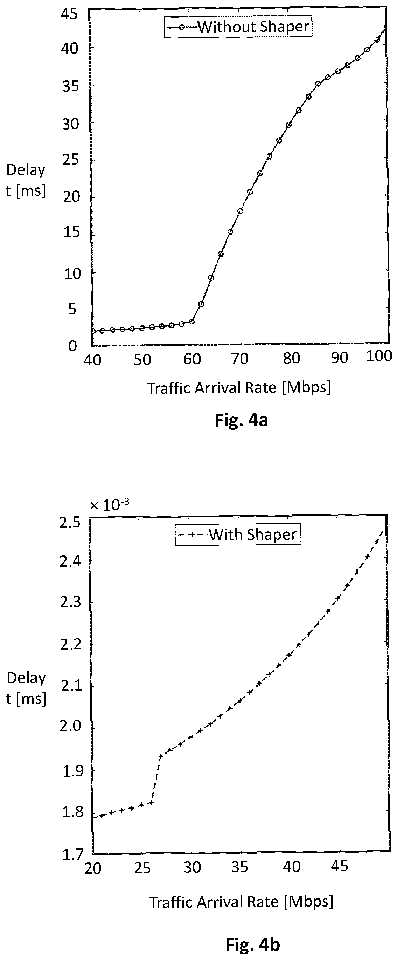

The performance of the at least one traffic shaper can be estimated by means of a probabilistic network calculus-based delay and jitter analysis using moment-generating functions. In one probabilistic network calculus-based delay and jitter analysis, the traffic shaper was set to limit the arriving traffic at 50% rate for non-critical data. Results of the probabilistic network calculus-based delay and jitter analysis is illustrated in Figs. 4a-4b, Figs. 5a-5b, and Figs. 6a-6b.

Figs. 4a-4b show two graphs, each illustrating a bound on transmission delay in a communication network without and with at least one implemented traffic shaper, respectively. In the case without the at least one implemented traffic shaper, there is a delay within the interval of 2 ms to 5 ms for traffic arrival rates within an interval between 40 Mbps and 50 Mbps. At approximately 60 Mbps, the traffic arrival rates become too taxing for the communication network, and the delay increases rapidly for increasing traffic arrival rate. As a comparison, in the case with the at least one implemented traffic shaper, the corresponding delay for the same interval between 40 Mbps and 50 Mbps is between 2.2 x 10⁻³ ms and 2.5 x 10⁻³ ms. In other words, the delay in the case without the at least one implemented traffic shaper is about 1000 times more than the delay in the case with the at least one implemented traffic shaper, thus illustrating the significant reduction in delay in a non-dedicated communication network used to communicate operational data between the two protection relays when implementing the at least one traffic shaper. In other words, Figs. 4a-4b show that the bound-on transmission delay reduces from few milliseconds to few microseconds by introduction of traffic shaper. Lower transmission delay in forward and reverse direction is because of no/low queuing delays owing to a free and congestion-free network path availability.

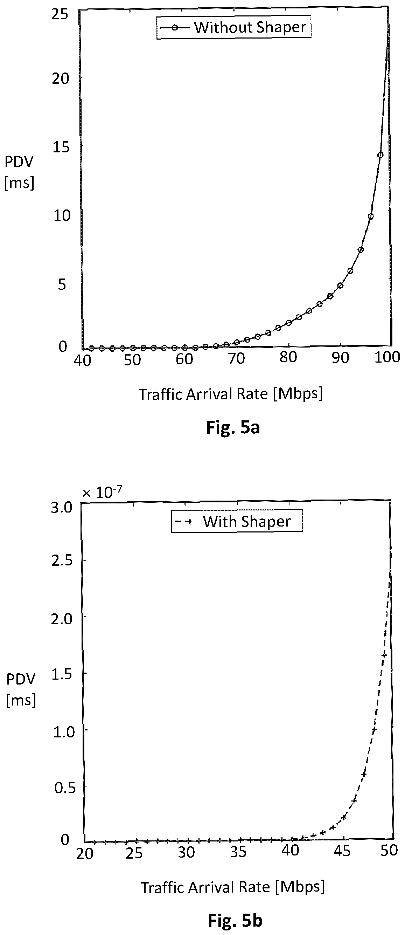

Figs. 5a-5b show two graphs, each illustrating a bound on PDV (jitter) in a communication network with and without at least one implemented traffic shaper, respectively. In particular, Figs. 5a-5b show that, with the at least one traffic shaper, the packet delay variation (PDV) or jitter levels is also reduced to few microseconds. The lowest or minimum delays in both directions along with reduced jitter levels imply that the asymmetry associated with network path is minimum.

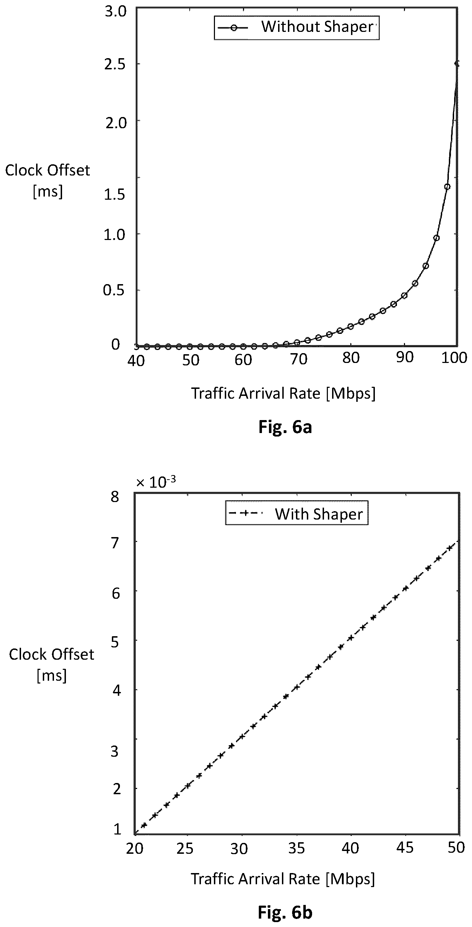

Figs. 6a-6b show two graphs, each illustrating a bound on clock offset in a communication network with and without at least one implemented traffic shaper, respectively. In particular, Figs. 6a-6b show that with the at least one traffic shaper, the clock offset is reduced from a few milliseconds to level of a few microseconds. The time synchronization accuracy, given by absolute value of clock offset, is also improved from few milliseconds to few microseconds' levels.

Thus, as illustrated in the Figs. 4a-4b, 5a-5b, 6a-6b, the performance analysis shows that implementing at least one traffic shaper which limits the arrival traffic rate to 50% resulted in delay, jitter, asymmetry and clock offset error levels of critical messages being reduced from a few milliseconds to a few microseconds.

By implementing the at least one traffic shaper, communication performance parameters of the non-dedicated communication network can be accurately measured. This allows for more accurate configuration of a dynamic security window, thereby improving differential protection wherein operational data is communicated between two differential protection relays via a non-dedicated communication network. The transmission delay, jitters, asymmetry and clock offset also reduce significantly. The time synchronization accuracy also improves because of this.

In one preferred embodiment, the system 100 is configured to measure a communication performance of the communication network, and based on the measured communication performance, dynamically set a security window for a trip decision by the first protection relay and the second protection relay. The communication performance is at least indicative of a communication latency, wherein the system is configured to activate a back-up protection when the communication latency exceeds a predetermined tolerance limit.

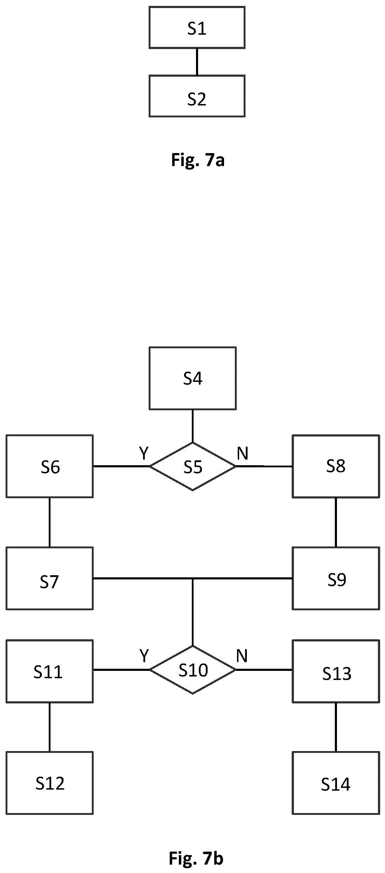

Fig. 7a schematically illustrates a method of controlling differential protection communication. The method comprises controlling communication between a first protection system PS_{A} at a first substation 10_{A} of an electrical power network EPN and a second protection system PS_{B} at a second substation 10_{B} of the electrical power network EPN. The first substation 10_{A} and the second substation 10_{B} are electrically connected via a power line PL. The first protection system PS_{A} and the second protection system PS_{B} are communicatively connected via a communication network 1000. The communication network 1000 comprises a plurality of network devices S₁, S₂, ..., S_{N} and a plurality of communication paths interconnecting the plurality of network devices. Each network device forms a node of said communication network and wherein each communication path is provided by a sequence of nodes involving a first node configured to communicatively connect to said first protection system PS_{A} and a second node configured to communicatively connect to said second protection system PS_{B.} The method comprises communicating S1 critical data and non-critical data between the first protection system PS_{A} and the second protection system PS_{B} via said plurality of communication paths. The critical data comprises first operational data comprising first source data SD_{A} representing a first power line measurement of the power line PL at the first substation 10_{A} and/or second operational data comprising second source data SD_{B} representing a second power line measurement of the power line PL at the second substation 10_{B}. The method comprises controlling S2 at least one network parameter associated with at least one node of said communication network by means of at least one traffic shaper for providing, from said plurality of communication paths, at least one traffic-shaped communication path in which communication of critical data is prioritized over non-critical data.

Fig. 7b schematically illustrates some more steps of the method of controlling differential protection communication, which method is implemented by the system 100. The method may comprise reading S4 data from at least one communication channel. The method may comprise determining S5 from said data from the at least one communication channel whether the communication network is healthy. If the communication network is healthy, the method may comprise periodically exchanging S6 timestamp data between the protection relays, followed by computing S7 transmission delay (latency) and time offset. If the communication network is not healthy, the method may comprise analyzing S8 the delay and offset error data from historic data, followed by estimating S9 transmission delay (latency) and time offset based on the historic data. The method may comprise determining S10 whether communication parameters are within tolerable ranges. If the communication parameters are within tolerable ranges, the method may comprise extracting S11 communication parameters of interest for adjusting a security window for the differential protection relays, followed by adjusting S12 the security window for the differential protection relays based on the communication parameters. If the communication parameters are not within tolerable ranges, the method may comprise sending S13 an alarm or a block signal to either one or both of the protection systems at the respective substations, and in particular either one or both of the protection relays, followed by switching S14 to a backup protection solution.

In one preferred embodiment, source data comprise at least one electrical parameter, which at least one electrical parameter comprises at least one sample values or at least one phasor value, and the source data is sent as critical data via the communication network implementing the at least one traffic shaper. The at least one traffic shaper may ensure that the at least one electrical parameter encounters very low and deterministic transmission delay, jitter, asymmetry, and time synchronization errors due to imperfect communication of the non-dedicated communication network.

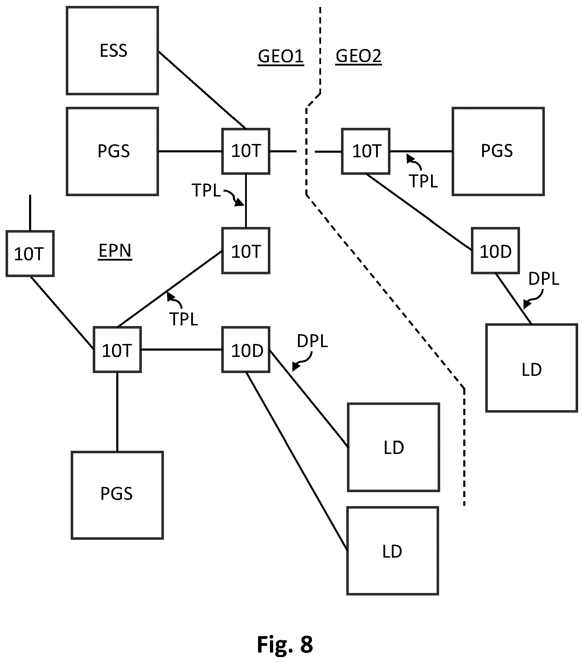

In Fig. 8, the electrical power network EPN is schematically illustrated to comprise one power supporting system ESS electrically connected to a transmission substation 10T. Depending on design and/or control strategy, the power supporting system ESS may provide active power (real power) support and/or reactive power support.

As a non-limiting example, the power supporting system may be configured to provide active power support by storing excess electricity during low demand and supply power during high demand. As a non-limiting example, the power supporting system may be configured to provide active power support by supplying or absorbing power to maintain an operation frequency of the electrical power network within operational limits relative a target operation frequency (e.g., 50 Hz in Europe or 60 Hz in USA). In addition, as further non-limiting examples, an power supporting system ESS may be configured to provide active power support by implementing any one of black start capability or renewable energy power balancing. As a non-limiting example, the power supporting system may be configured to provide reactive power support by injecting or absorbing reactive power to stabilize voltage levels in transmission system and/or distribution system. As a non-limiting example, the power supporting system may be configured to provide reactive power support by supplying or absorbing reactive power to improve power factor.

The electrical power network of the present disclosure may be configured to be electrically connected to, or comprise, at least one power supporting system. The at least one power supporting system may be one power supporting system or a plurality of power supporting systems. The at least one power supporting system may be configured to store electrical power for later use. The at least one power supporting system may be configured to supply electrical energy to the electrical power network in response to a demand variation. Each power supporting system may comprise at least one energy storage unit configured to store electrical energy.

The at least one energy storage unit may be any one of a battery, a super-battery, a capacitor, a super-capacitor, or a flywheel.

The electrical power network may comprise at least one transmission system and/or at least one distribution system configured to electrically connect to at least one substation 10T, 10D. The at least one transmission system and/or the at least one distribution system comprises at least one power line TPL, DPL.

The at least one transmission system may be configured to transmit electrical power from at least one power generation system and/or at least one power supporting system to at least one substation via at least one power line. The transmission system may be configured to electrically connect a plurality of substations using a plurality of power lines to form a network of interconnected substations. Each substation may be configured to receive electrical power from at least one preceding substation via at least one incoming power line and/or supply electrical power to at least one subsequent substation via at least one outgoing power line.

The at least one transmission system may be configured for single-phase or three-phase power transmission. That is, the number of power lines anywhere in the transmission system may correspond to single-phase or three-phase power transmission. However, the present disclosure is not limited to single-phase or three-phase power transmission, but any number of phase power transmission may be implemented.

The at least one transmission system may be configured to operate at high voltage, HV, to reduce transmission losses.

The at least one transmission power line may be adapted for high voltage (HV), specifically high voltage alternating current (HVAC) or high voltage direct current (HVDC).

The at least one transmission power line may be an overhead power line or an underground power line.

Any one power line of the at least one power line of the transmission system may be adapted for HV, specifically HVAC or HVDC.

The at least one distribution system may be configured to distribute electrical power to at least one load LD via at least one power line DPL. The distribution system may be configured to operate at lower voltage levels suitable for end-use applications. The distribution system may be electrically connected to at least one distribution substation 10D configured to step down the voltage of electrical power received from the transmission system to a level suitable for distribution to loads. The at least one load LD may comprise industrial loads, commercial loads, residential loads, or combinations thereof.

The distribution system may be configured for single-phase or three-phase power distribution. That is, the number of power lines anywhere in the distribution system may correspond to single-phase or three-phase power distributed. However, the present disclosure is not limited to single-phase or three-phase power distribution, but any number of phase power distribution may be implemented.

The at least one power line of the distribution system may be adapted for medium voltage, MV, alternating current, MVAC, or low voltage, LV, alternating current, LVAC.

The at least one power line of the distribution system may be adapted for medium voltage direct current, MVDC, or low voltage alternating current, LVAC.

The at least one power line of the distribution system may be an overhead power line or an underground power line.

Any one power line of the distribution system may be formed from materials such as copper or aluminum, selected for their electrical conductivity and durability. The at least one power line of the distribution system may be configured as an overhead power line supported by poles and insulators, or as an underground power line, typically insulated with materials like cross-linked polyethylene (XLPE) or ethylene propylene rubber (EPR) for electrical insulation and protection against environmental factors. The at least one power line of the distribution system may be designed to handle the specific voltage levels associated with MVAC, MVDC, LVAC, or LVDC, with appropriate voltage ratings and insulation to ensure safe and efficient power distribution.

Fig. 8 schematically illustrates the electrical power network EPN to be electrically connected to a plurality of loads LD. Here, a load may refer to any device, system, or facility that consumes electrical power. Loads can vary in size, type, and electrical characteristics, depending on their application. Loads may be residential loads (household appliances, lighting, HVAC systems, and personal electronic devices), commercial load (office buildings, hospitals, etc.), industrial load (factories, manufacturing plants etc.) or transportation load (electric trains, trams, metro systems, and electric vehicle, EV, charging stations).

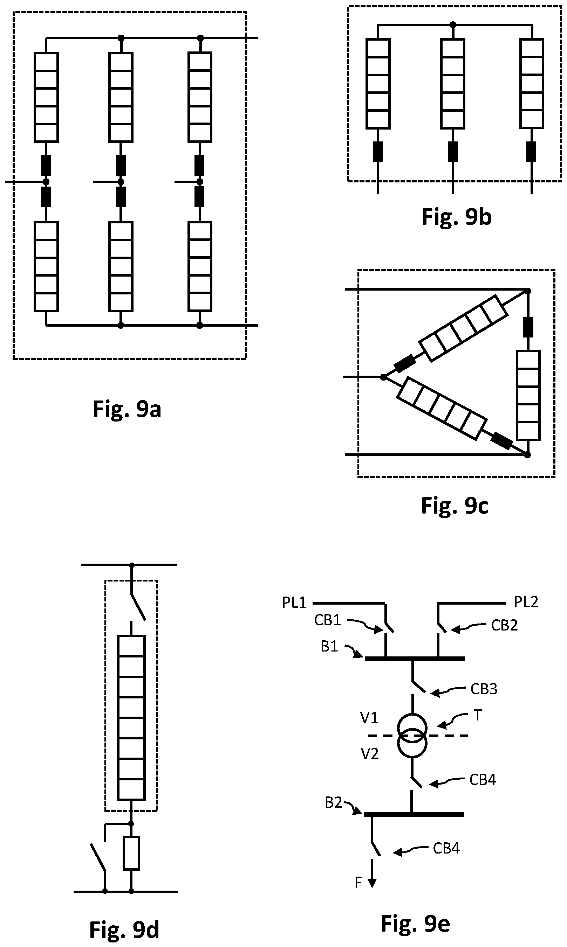

The electrical power network EPN may comprise at least one power supporting system such as a voltage source converter. Figs. 9a-9c schematically illustrate a voltage source converter configured to provide power support in terms of active power and/or reactive power, frequency, voltage, current, etc. as needed. The VSC 10 may be adapted as a monolithic VSC or as a multi-level converter, MMC, based VSC (see Figs. 9a-9c). A monolithic VSC may refer to a VSC implementing a single integrated unit with a centralized design with a few large semiconductor devices (e.g., IGBTs or MOSFETs) to handle high voltages and currents. A MMC-based VSC may refer to a VSC that implements a modular architecture, where the VSC is composed of multiple submodules arranged in series in each phase leg. The MMC-based VSC 10 may be designed as a YY-MMC VSC (see Fig. 9a), a Y-connected chain-link VSC (see Fig. 9b), or a D-connected chain-link VSC (see Fig. 9c). The power supporting system may alternatively be an energy storage system ESS (see Fig. 9d).

The at least one substation of the electrical power network may be configured to support bidirectional power flow, allowing power to be transmitted in either direction as needed to meet system requirements or operational conditions.

Each substation 10T, 10D of the at least one substation generally comprises at least one busbar, which may be a single conductor or a group of conductors. The at least one busbar may be housed in an insulated enclosure. The at least one busbar is configured to electrically connect to a power line of the transmission system or the distribution system. As schematically illustrated in Fig. 9e, a first power line PL1 and a second power line PL2 may be electrically connected or connectable to the same busbar B1. A first circuit breaker CB1 may be configured to disconnect the first power line PL1 from the first busbar B1. A second circuit breaker CB2 may be configured to disconnect the second power line PL2 from the first busbar B1. A plurality of power lines may be electrically connected or connectable to the same busbar. The at least one busbar may facilitate the management and distribution of electrical power within the substation, comprising voltage transformation, power routing, fault protection, and synchronization of power flow.

The substation may comprise at least one transformer. The transformer may be configured to step up or step down the voltage of the electrical power based on its voltage ratio, which is determined by the number of turns on the primary and secondary windings. As a non-limiting example, a transformer T is schematically illustrated in Fig. 9e. The first busbar B1 is electrically connected or connectable to a primary winding of the transformer T. A second busbar B2 is electrically connected or connectable to a secondary winding of the transformer T. The transformer T may be configured to be disconnectable from the first busbar B1 and/or the second busbar B2 by means of a third circuit breaker CB3 and a fourth circuit breaker CB4 respectively.

The transformer T may be configured to transform voltage from a first voltage level V1 to a second voltage level V2 depending on the transformer's voltage ratio. As a non-limiting example, the first voltage level V1 may be HV and the second voltage level V2 may be MV. As a non-limiting example, the first voltage level V1 may be MV and the second voltage level V2 may be LV.

The transformer may comprise at least one load tap changer (not shown in Fig. 9e) configured to adjust the number of connected windings in the primary windings or the secondary winding. This allows adjustment of the voltage ratio in response to load conditions, ensuring stable power delivery and preventing overloads. The at least one load tap changer may be configured to operate automatically in response to load conditions. Alternatively, the at least one load tap changer may be configured to be operated manually.

The substation may comprise at least one power line switch, which may be one power line switch or a plurality of power line switches. Each power line switch may be configured to disconnect a first power line and connect a second power line. That is, the substation may be configured to use the at least one power line switch to reroute electrical power between different parts of the network as necessary to maintain system stability and operational flexibility.

In some cases, the substation may be configured to synchronize received power with other network components by adjusting phase alignment or frequency. Further, a substation may also comprise control systems to monitor and adjust power distribution based on real-time demand and system conditions. Additionally, the substation may integrate with at least one power supporting system to stabilize the network during high demand or intermittent supply by temporarily storing power for later use.

It should be understood that the electrical power network may be adapted to extend within a first geographical area GEO1, such as a country. The electrical power network may be configured to connect with an electrical power network, or any component thereof, which is located in a second geographical area GEO2 which is different from the first geographical area GEO1, as schematically illustrated in Fig. 6.

One or more substations of the electrical power network may comprise a protection system. The protection system may ensure safe and reliable operation of the substation. The protection system may be configured to detect and respond to abnormal conditions, such as faults or system disturbances, preventing damage to equipment and maintaining overall system stability.

The protection system may comprise at least one protection relay. A protection relay is configured to continuously monitor electrical parameters, such as voltage, current, and frequency, and compare these values against predefined thresholds. Upon detecting an abnormal condition, such as a fault or short circuit, the protection relay may be configured to initiate an appropriate response, typically by sending a signal to a circuit breaker to disconnect a part of the electrical power network affected by the abnormal condition. The protection relay may be configured to monitor system conditions such as overvoltage, undervoltage, overcurrent, and frequency deviations.

The protection system may further comprise at least one circuit breaker. The at least one circuit breaker may be configured to disconnect a part of the electrical power network, e.g., by disconnecting at least one power line. In response to a signal from the protection relay, the circuit breaker may be configured to automatically or manually disconnect the part of the electrical power network. Once an abnormal condition is cleared, the circuit breaker may be reset to restore normal operation.

The protection system may comprise a merging unit. The merging unit may be configured to collect at least one electrical parameter associated with the substation, including, but not limited to, a power line measurement of a power line at the substation. The power line measurement may indicate at least one of, or any combination of a current, a voltage, and a frequency of the power being transmitted in the power line. The merging unit may be configured to collect electrical parameters of components of the substation. The merging unit may be configured to collect operational characteristics of the network. The merging unit may be configured to format collected data into a unified, standardized format. This may enable a seamless transmission to higher-level control systems or protection relays for further analysis and decision-making.

A power line measurement may be performed by a measurement device. For instance, a current transformer (CT) may be used to measure current by stepping it down to a manageable value. For instance, a voltage transformer (VT) (or a potential transformer) may be used to measure voltage by reducing high voltages to a lower, measurable level. A phase-Locked Loop (PLL) circuit may be used to measure frequency by analyzing an oscillation of the power line's AC signal. Any of these power line measurements may be collected by the aforementioned merging unit.

Moreover, differential protection may be provided by the cooperation of a first protection relay at a first substation and a second protection relay at a second substation. This arrangement may ensure protection of the electrical power network by detecting differences in current between substations, enabling rapid fault detection and optionally isolation if needed.

While the foregoing is directed to embodiments of the disclosure, other and further embodiments may be devised without parting from the inventive concept discussed herein. The scope of the invention is however determined by the claims.

## Claims

1. A system (100) for controlling communication between a first protection system (PS_{A}) at a first substation (10_{A}) of an electrical power network (EPN) and a second protection system (PS_{B}) at a second substation (10_{B}) of the electrical power network (EPN), wherein the first substation (10_{A}) and the second substation (10_{B}) are each electrically connected to a power line (PL), wherein a first protection relay (R_{A}) of the first protection system (PS_{A}) and a second protection relay (R_{B}) of the second protection system (PS_{B}) provide differential protection, the system (100) comprising:
a communication network (1000) comprising a plurality of network devices (S₁, S₂, ..., S_{N}) and a plurality of communication paths interconnecting the plurality of network devices, wherein each network device forms a node of said communication network and wherein each communication path is provided by a sequence of nodes including a first node configured to communicatively connect to said first protection system and a second node configured to communicatively connect to said second protection system, wherein the system (100) is configured to:
communicate critical data and non-critical data between the first protection system and the second protection system via said plurality of communication paths, wherein said critical data comprises first source data (SD_{A}) representing a first power line measurement of the power line (PL) at the first substation (10_{A}), and/or second source data (SD_{B}) representing a second power line measurement of the power line (PL) at the second substation (10_{B}),
wherein the system (100) further comprises:
at least one traffic shaper configured to control at least one network parameter associated with at least one node of said communication network for providing, from said plurality of communication paths, at least one traffic-shaped communication path in which communication of critical data is prioritized over non-critical data.

2. System (100) according to claim 1,
wherein a first traffic shaper of said at least one traffic shaper is implemented on a first network device forming said first node (S1); and/or
wherein a second traffic shaper of said at least one traffic shaper is implemented on a second network device providing said second node (SN); and/or
wherein said at least one traffic shaper comprises a plurality of traffic shapers, wherein each traffic shaper of said plurality of traffic shapers is implemented on a respective network device (S₁, S₂, ..., S_{N}) of said plurality of network devices (S₁, S₂, ..., S_{N}); and/or
wherein one traffic shaper of said plurality of traffic shapers is implemented on each network device (S₁, S₂, ..., S_{N}) of said plurality of network devices (S₁, S₂, ..., S_{N}).

3. System (100) according to any one of the preceding claims, comprising a control device (101) communicatively connected to at least one network device (S₁, S₂, ..., S_{N}) of said plurality of network devices (S₁, S₂, ..., S_{N}), which control device (101) is configured to:
transfer traffic shaper software to at least one network device of said network devices for remote, or automatic, installation of one of said at least one traffic shaper implemented on said at least one network device, and/or
configure one of said at least one traffic shaper implemented on said at least one network device.

4. System (100) according to any one of the preceding claims, wherein said at least one network parameter associated with said at least one node comprises: rate limit, committed information rate, peak information rate, burst size, priority level, and/or latency.

5. System (100) according to any one of the preceding claims, configured to obtain information of data traffic into and/or out of at least one node of said communication network.

6. System (100) according to claim 5, wherein said at least one traffic shaper is configured to control said at least one network parameter associated with at least one node of said communication network autonomously based on said information of data traffic.

7. System (100) according to any one of claims 5-6, wherein the system (100) is configured to determine said at least one traffic-shaped communication path by means of a traffic shaping algorithm applied on said information of data traffic.

8. System (100) according to any one of claims 5-7, wherein said at least one traffic shaper is configured to:
based on said information of data traffic, provide a data traffic policy to at least one network device of said plurality of network devices, which data traffic policy specifies how to process communication of said critical data and said non-critical data.

9. System (100) according to any of claims 5-8, wherein said information of data traffic comprises: network burstiness, available data rate, data packet type, data packet delay, time offset error, and/or data packet loss.

10. System (100) according to any one of the preceding claims, wherein
said at least one electrical parameter of the first source data (SD_{A}) comprises a sample value and/or a phasor value based at least on said first power line measurement, and/or
said at least one electrical parameter of the second source data (SD_{B}) comprises a sample value and/or a phasor value based at least on said second power line measurement.

11. System (100) according to any one of the preceding claims, configured to:
measure a communication performance of the communication network, and
based on the measured communication performance, dynamically set a security window for a trip decision by the first protection relay and the second protection relay,
wherein, optionally, the communication performance is at least indicative of a communication latency, wherein the system is configured to activate a back-up protection when the communication latency exceeds a predetermined tolerance limit.

12. System (100) according to any one of the preceding claims, wherein said critical data comprises: timing service parameter data.

13. System (100) according to any one of the preceding claims, wherein said non-critical data comprises: monitoring data, file transfer data, and/or configuration command data.

14. An electrical power network (EPN) comprising:
at least one substation (10_{A}), wherein a first substation (10_{A}) of said at least one substation (10_{A}) is configured to electrically connect to a second substation via a power line (PL),
the first substation comprising a first protection system (PS_{A}), wherein the first protection system (PS_{A}) comprises a first protection relay (R_{A}) configured to cooperate with a second protection relay (R_{B}) of a second protection system (PS_{B}) at the second substation (10_{B}) to provide differential protection,
the electrical power network (EPN) further comprising:
a system (100) according to any one of the preceding claims configured to provide said communication network (1000),
wherein, optionally, the electrical power network (EPN) comprises the second substation (10_{B}) and the second protection system (PS_{B}),
wherein, optionally, the power line (PL) is a medium voltage, MV, power line, a low voltage, LV, power line, or a high voltage, HV, power line.

15. Method of controlling communication between a first protection system (PS_{A}) at a first substation (10_{A}) of an electrical power network (EPN) and a second protection system (PS_{B}) at a second substation (10_{B}) of the electrical power network (EPN), the first substation (10_{A}) and the second substation (10_{B}) electrically connected via a power line (PL), wherein the first protection system (PS_{A}) and the second protection system (PS_{B}) are communicatively connected via a communication network (1000), said communication network (1000) comprising a plurality of network devices (S₁, S₂, ..., S_{N}) and a plurality of communication paths interconnecting the plurality of network devices, wherein each network device forms a node of said communication network and wherein each communication path is provided by a sequence of nodes including a first node configured to communicatively connect to said first protection system (PS_{A}) and a second node configured to communicatively connect to said second protection system (PS_{B}), the method comprising:
communicating (S1) critical data and non-critical data between the first protection system (PS_{A}) and the second protection system (PS_{B}) via said plurality of communication paths, wherein said critical data comprises first operational data comprising first source data (SD_{A}) representing a first power line measurement of the power line (PL) at the first substation (10_{A}), and/or second operational data comprising second source data (SD_{B}) representing a second power line measurement of the power line (PL) at the second substation (10_{B}), and
controlling (S2) at least one network parameter associated with at least one node of said communication network by means of at least one traffic shaper to provide from said plurality of communication paths at least one traffic-shaped communication path in which communication of critical data is prioritized over non-critical data.
